# EUROPÄISCHE PATENTSCHRIFT

(11) **EP 1 658 210 B1**
(45) Veröffentlichungstag und Bekanntmachung des Hinweises auf die Patenterteilung: **22.08.2007**
(21) Anmeldenummer: 04817088.0
(22) Anmeldetag: 19.08.2004
(51) Int. Cl.: B60T 1/00

(54) **BREMSSYSTEM VOM TYP BRAKE-BY-WIRE MIT ÜBERWACHUNGSMODUL**
BRAKE SYSTEM OF TYPE BRAKE-BY-WIRE WITH MONITORING MODULE
SYSTEME DE FREINAGE DU TYPE BRAKE-BY-WIRE AVEC MODULE DE SURVEILLANCE

(30) Priorität: 19.08.2003 DE 10337948
(43) Veröffentlichungstag der Anmeldung: 24.05.2006
(73) Patentinhaber: Continental Teves AG & Co. oHG, 60488 Frankfurt (DE)
(72) Erfinder: ALBRICH VON ALBRICHSFELD, Christian, 64283 Darmstadt (DE); GURZAWSKI, Timo, 63512 Hainburg (DE); ULLRICH, Thorsten, 64579 Gernsheim (DE); FÜHRER, Jochen, 64287 Darmstadt (DE)
(86) Internationale Anmeldenummer: PCT/EP2004/051847
(87) Internationale Veröffentlichungsnummer: WO 2005/032896

(56) Entgegenhaltungen:
- DE-A1- 19 514 382
- DE-A1- 19 640 107
- DE-A1- 19 750 977
- DE-A1- 19 907 338

## Beschreibung

Die Erfindung betrifft ein Bremssystem vom Typ "Brake-by-wire" zur Betätigung einer Kraftfahrzeugbremsanlage, mit einem sowohl mittels eines Bremspedals als auch mittels einer elektronischen Steuer- und Regeleinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind, mit einem dem Bremskraftverstärker wirkungsmäßig nachgeschalteten Hauptbremszylinder, an dessen Druckräume Radbremsen des Kraftfahrzeuges angeschlossen sind, einem mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist, einem ersten Sensor zur Erfassung des Bremspedal-Betätigungsweges, einem zweiten Sensor zur Erfassung des Weges eines Ausgangsglieds (Druckstange) des Bremskraftverstärkers und einem dritten Sensor (bzw. Drucksensor) zur Erfassung des im System herrschenden Bremsdruckes, deren Signale der elektronischen Steuer- und Regeleinheit zugeführt werden.

Ein derartiges Bremssystem ist aus der internationalen Patentanmeldung der Anmelderin WO 2004/005095 bekannt. Dem Offenbarungsgehalt der erwähnten Patentanmeldung ist zu entnehmen, dass die elektronische Steuer- und Regeleinheit auf Grund festgestellter Abweichungen zwischen Sollwertvorgaben und mittels der Sensoren gemessenen Istwerten geeignete Sicherheitsprozesse, insbesondere eine hydraulische Rückfallebene, auslöst. Dem Dokument sind jedoch keine Hinweise zu entnehmen, wie ein Versagen der hydraulischen Rückfallebene, das beispielsweise durch Eintrag von Luft oder das Auftreten von Leckagen im System, für den Fahrer erkennbar bzw. vom System detektierbar ist.

Es ist daher Aufgabe der vorliegenden Erfindung, bei einem Bremssystem der eingangs genannten Art Maßnahmen vorzuschlagen, die es ermöglichen, bei einem Fehlerfall, wie beispielsweise einem Lufteinschluss oder einem Bremskreisausfall, eine dadurch verursachte erhöhte Druckmittelvolumenaufnahme durch regelungstechnische Mittel zu kompensieren.

Eine erste Lösung dieser Aufgabe besteht darin, dass die elektronische Steuer- und Regeleinheit eine Regelschaltung zur Regelung des vom Ausgangsglied des Bremskraftverstärkers zurück gelegten Weges aufweist, dessen Sollwert entsprechend dem Betätigungsweg des Bremspedals berechnet wird, wobei ein Überwachungsmodul vorgesehen ist, das bei einem Fehlerfall, wie beispielsweise einem Lufteinschluss oder einem Bremskreisausfall, eine teilweise Kompensation der durch den Fehler verursachten Verlängerung des vom Ausgangsglied des Bremskraftverstärkers zurück gelegten Weges vornimmt.

Eine zweite Lösung der vorhin genannten Aufgabe sieht vor, dass die elektronische Steuer- und Regeleinheit eine Regelschaltung zur Regelung des vom Ausgangsglied des Bremskraftverstärkers zurück gelegten Weges sowie des im System herrschenden, hydraulischen Druckes aufweist, deren Sollwerte entsprechend dem Betätigungsweg des Bremspedals berechnet werden, wobei ein Überwachungsmodul vorgesehen ist, das bei einem Fehlerfall, wie beispielsweise einem Lufteinschluss oder einem Bremskreisausfall, die Regelschaltung vom Wegregelmodus auf den Druckregelmodus umschaltet, um eine Kompensation der durch den Fehler verursachten Verlängerung des vom Ausgangsglied des Bremskraftverstärkers zurück gelegten Weges vorzunehmen.

Bei einer vorteilhaften Weiterbildung der ersten erfindungsgemäßen Lösung erfolgt die teilweise Kompensation der durch den Fehler verursachten Verlängerung des vom Ausgangsglied des Bremskraftverstärkers zurück gelegten Weges durch Hinzuaddieren eines Korrekturwertes zum Sollwert.

Bei einer weiteren vorteilhaften Ausgestaltung des Erfindungsgegenstandes ist im Überwachungsmodul eine Druckmittelvolumen-Druck-Kennlinie, d. h. die Abhängigkeit der Druckmittelvolumenaufnahme der Bremsen bzw. des der Druckmittelvolumenaufnahme entsprechenden, vom Ausgangsglied des Bremskraftverstärkers zurück gelegten Weges vom hydraulischen Druck (p) Q bzw. S_{Ds} = f(p) abgelegt, wobei dem Überwachungsmodul die Istwerte des vom Ausgangsglied des Bremskraftverstärkers zurück gelegten Weges sowie des im System herrschenden hydraulischen Druckes zugeführt werden, wobei aus dem Druck-Istwert ein dem Druckmittelvolumen-Sollwert entsprechender Wegwert berechnet wird, der mit dem Istwert des vom Ausgangsglied des Bremskraftverstärkers zurück gelegten Weges verglichen wird, und, wenn das Vergleichsergebnis einen Schwellwert überschreitet, auf einen Fehler im System geschlossen wird.

Der vorhin genannte Korrekturwert kann vorzugsweise dem halben Vergleichsergebnis entsprechen.

Bei einer anderen vorteilhaften Weiterbildung des Erfindungsgegenstandes wird eine erhebliche Verbesserung der Regelungsgüte dadurch erreicht, dass die Istwerte einer Tiefpassfilterung unterzogen werden.

Ein anderes vorteilhaftes Merkmal der vorliegenden Erfindung sieht vor, dass beim Erkennen eines Fehlerfalls eine Übergangsfunktion, beispielsweise eine Tiefpassfilterung oder ein Rampenverlauf, aktiviert wird.

Schließlich ist nach einem anderen Erfindungsmerkmal vorgesehen, dass beim Erkennen eines Fehlerfalls im System eine Warnlampe aktiviert wird.

Weitere Merkmale und Vorteile der Erfindung werden in der nachfolgenden Beschreibung unter Bezugnahme auf die beiliegenden Zeichnungen an zwei Ausführungsbeispielen näher erläutert. In den Zeichnungen zeigen:
Fig. 1 eine schematische Darstellung des Bremssystems nach der Erfindung,
Fig. 2 ein Blockschaltbild einer ersten Ausführung einer erfindungsgemäßen Regelschaltung, und
Fig. 3 ein Blockschaltbild einer zweiten Ausführung einer erfindungsgemäßen Regelschaltung, und
Fig. 4 eine diagrammatische Darstellung der Funktionsweise der in Fig. 3 gezeigten zweiten Ausführung der Regelschaltung.

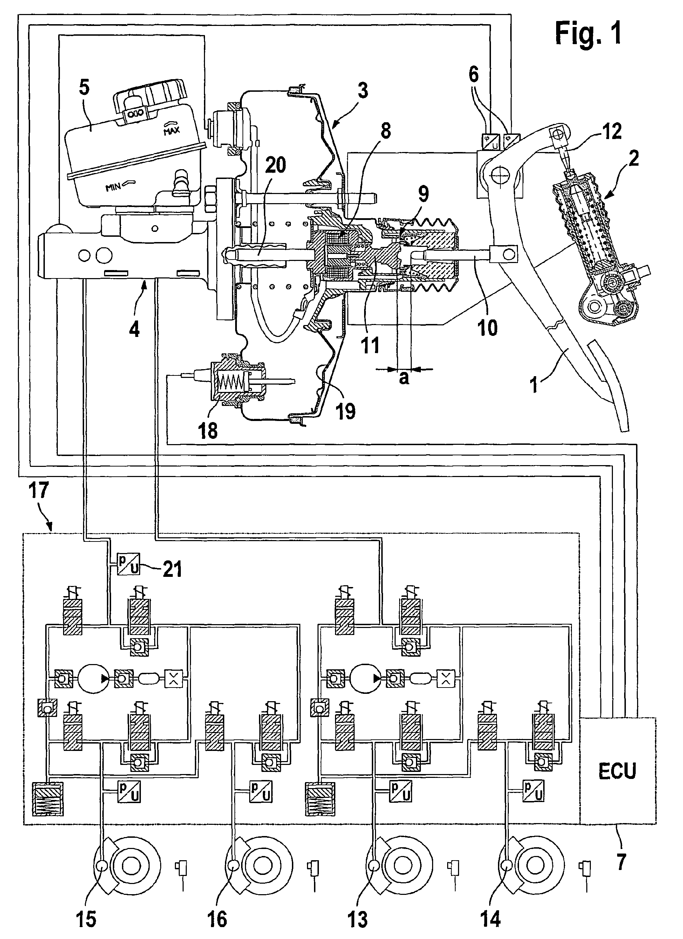

Das in Fig. 1 in einer schematischen Darstellung gezeigte Bremssystem zur Betätigung einer Kraftfahrzeugbremsanlage vom Typ "Brake-by-wire" besteht im Wesentlichen aus einem Bremskraftverstärker, vorzugsweise einem Unterdruckbremskraftverstärker 3, einem dem Bremskraftverstärker 3 nachgeschalteten Hauptbremszylinder, vorzugsweise einem Tandemhauptzylinder 4, an dessen nicht dargestellte Druckräume unter Zwischenschaltung einer hydraulischen Regeleinheit 17 Radbremsen 13, 14, 15, 16 eines Kraftfahrzeugs angeschlossen sind, einem dem Hauptbremszylinder 4 zugeordneten Druckmittelvorratsbehälter 5, einem Bremspedal 1 zur Betätigung des Bremskraftverstärkers 3 durch den Fahrer, einem mit dem Bremspedal 1 insbesondere in der Betriebsart "Brake-by-wire" zusammenwirkenden Pedalwegsimulator 2, der dem Fahrer das gewöhnliche Bremspedalgefühl vermittelt, mindestens einer Sensoreinrichtung 6 zur Erfassung eines Fahrerverzögerungswunsches bzw. des Betätigungsweges S_{Bp} des Bremspedals 1, sowie einer elektronischen Steuereinheit 7, durch deren Ausgangssignale u. a. ein dem Bremskraftverstärker 3 zugeordneter Elektromagnet 8 ansteuerbar ist, der eine vom Fahrerwillen unabhängige Betätigung eines pneumatischen Steuerventils 9 ermöglicht, das eine Luftzufuhr zum Bremskraftverstärker 3 steuert. Wie in der nachfolgenden Beschreibung ausführlich erläutert wird, enthält die elektronische Steuereinheit 17 eine Regelschaltung zur Regelung einer charakteristischen Größe des Bremskraftverstärkers 3, vorzugsweise des vom Ausgangsglied 20 des Bremskraftverstärkers 3 zurück gelegten Weges S_{Ds}, oder zur Regelung der genannten Größe und des im System herrschenden hydraulischen Druckes.

Ein zwischen dem Ende einer mit dem Bremspedal 1 gekoppelten Kolbenstange 10 und einem Steuerkolben 11 des vorhin genannten Steuerventils 9 vorgesehener axialer Spalt "a" gewährleistet eine Entkopplung der kraftübertragenden Verbindung zwischen dem Bremspedal 1 und dem Bremskraftverstärker 3 in der Betriebsart "Brake-by-wire". Ein Wegsensor 18 dient der Erfassung des Weges einer die Verstärkungskraft des Bremskraftverstärkers 3 aufbringenden beweglichen Wand 1 9 bzw. des Weges (S_{Ds}) eines Ausgangsglieds 20 des Bremskraftverstärkers 3, das seine Ausgangskraft auf einen nicht dargestellten ersten Kolben des Hauptbremszylinders 4 überträgt. Außerdem ist in der hydraulischen Regeleinheit 17 ein Drucksensor 21 integriert, der den im System herrschenden hydraulischen Druck (p) erfasst.

Der Pedalwegsimulator 2, durch den, wie bereits erwähnt, in der Betriebsart "Brake-by-wire" eine auf das Bremspedal wirkende Rückstellkraft unabhängig von einer Betätigung des Bremskraftverstärkers 3 simulierbar ist, ist derart ausgeführt, dass er in der Betriebsart "Brake-by-wire" bei der Entkopplung der kraftübertragenden Verbindung zwischen dem Bremspedal 1 und dem Bremskraftverstärker 3 zuschaltbar und außerhalb der Betriebsart "Brake-by-wire" abschaltbar ist. Die Betätigung des Pedalwegsimulators 2 erfolgt mittels eines am Bremspedal 1 angelenkten Betätigungsgliedes 12.

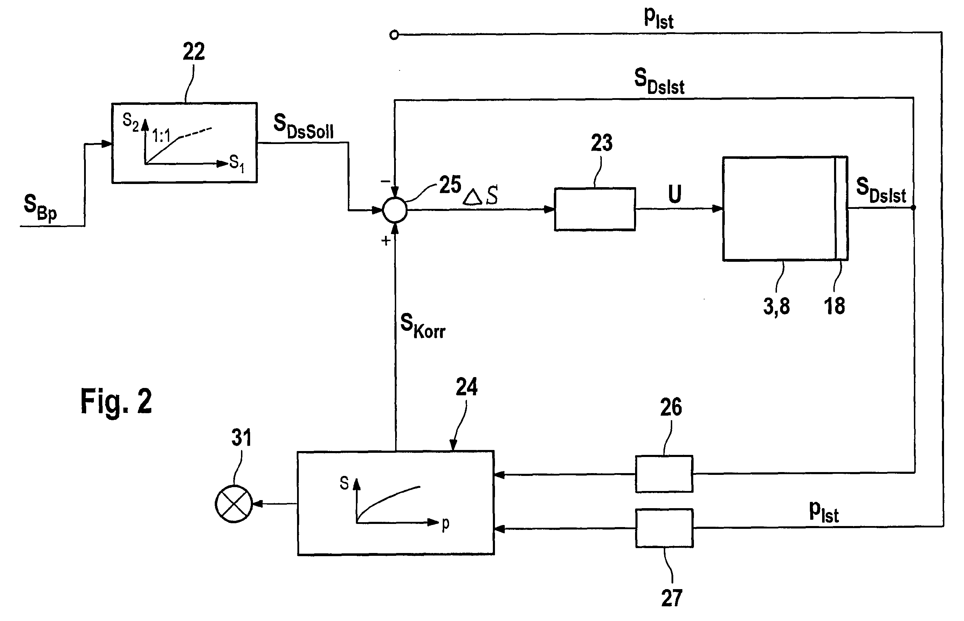

Die erste Ausführung der vorhin erwähnten Regelschaltung zur Regelung des vom Ausgangsglied 20 des Bremskraftverstärkers 3 zurück gelegten Weges S_{Ds} ist in Fig. 2 dargestellt und besteht im Wesentlichen aus einem Sollwertgenerierungsmodul 22, einem Wegregler 23 sowie einem Überwachungsmodul 24. Im Sollwertgenerierungsmodul 22 wird aus dem mittels des Wegsensors 6 ermittelten Betätigungsweg S_{Bp} des Bremspedals 1 der Sollwert S_{DsSoll} des vom Ausgangsglied 20 des Bremskraftverstärkers 3 zurück gelegten Weges S_{Ds} berechnet. Der Sollwert S_{DsSoll}, zu dem in einer Additionsstelle 25 ein im Überwachungsmodul 24 berechneter Korrekturwert S_{Korr} hinzu addiert wird, wird mit dem mittels des Wegsensors 18 ermittelten Istwert S_{DsIst} des vom Ausgangsglied 20 des Bremskraftverstärkers 3 zurück gelegten Weges verglichen, wonach die auf diese Art berechnete Regelabweichung ΔS dem Wegregler 23 zugeführt wird, dessen Ausgangsgröße, eine elektrische Spannung U, den Elektromagneten 8 ansteuert. Dem Überwachungsmodul 24, in dem eine Druckmittelvolumen-Druck-Kennlinie, d. h. die Abhängigkeit der Druckmittelvolumenaufnahme der Bremsen 13 - 16 bzw. des der Druckmittelvolumenaufnahme entsprechenden, vom Ausgangsglied 20 des Bremskraftverstärkers 3 zurück gelegten Weges S_{Ds} vom hydraulischen Druck p Q bzw. S_{Ds} = f(p) abgelegt ist, werden als Eingangsgrößen die Istwerte S_{DsIst}, p_{Ist} des vom Ausgangsglied 20 des Bremskraftverstärkers 3 zurück gelegten Weges sowie des im System herrschenden Druckes zugeführt, die vorzugsweise in zugeordneten Tiefpassfiltern 26, 27 einer Tiefpassfilterung unterzogen werden. Aus dem Druckistwert p_{Ist} wird im Überwachungsmodul 24 ein einem Druckmittelvolumen-Sollwert entsprechender Wegwert S_{Modell} berechnet, der mit dem Istwert S_{DsIst} des vom Ausgangsglied 20 des Bremskraftverstärkers 3 zurück gelegten Weges verglichen wird. Überschreitet das Vergleichsergebnis ΔS_{Diff} = S_{Modell} - S_{DsIst} einen Schwellwert S_{Schwell}, so wird der vorhin erwähnte Korrekturwert S_{Korr} erzeugt, der beispielsweise dem halben Wert ΔS/2 der dem Wegregler 23 zugeführten Regelabweichung ΔS entspricht. Gleichzeitig kann eine optische Warnung, beispielsweise durch Aufleuchten einer Warnlampe 31, erzeugt werden. Durch Hinzuaddieren des Korrekturwertes S_{Korr} wird eine teilweise Kompensation der Verlängerung vom Ausgangsglied 20 des Bremskraftverstärkers 3 zurück gelegten Weges S_{DsIst} erreicht, die beispielsweise durch Gaseinschlüsse im System oder einen Bremskreisausfall verursacht wird.

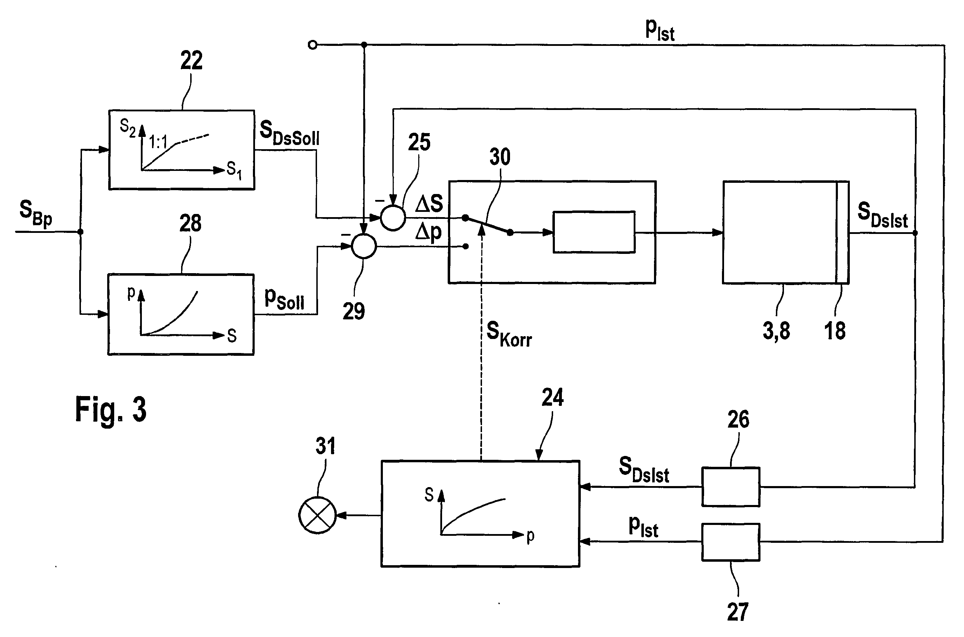

Bei der in Fig. 3 dargestellten zweiten Ausführung der Regelschaltung ist außer dem im Zusammenhang mit Fig. 2 erwähnten Weg-Sollwertgenerierungsmodul 22 ein Druck-Sollwertgenerierungsmodul 28 vorgesehen, in dem aus dem mittels des Wegsensors 6 ermittelten Betätigungsweg S_{Bp} des Bremspedals 1 der Sollwert p_{Soll} des im System herrschenden hydraulischen Druckes berechnet wird. Während der Weg-Sollwert S_{DsSoll} wie bei der ersten Ausführung mit dem Weg-Istwert S_{DsIst} zur Bildung der Regelabweichung ΔS verglichen wird, wird in einer zweiten Additionsstelle 29 aus dem Druck-Sollwert p_{Soll} und dem Druck-Istwert p_{Ist} eine zweite Regelabweichung Δp gebildet. Die beiden Regelabweichungen ΔS, Δp werden einer Umschalteinrichtung 30 zugeführt, die entsprechend dem vom Überwachungsmodul 24 erzeugten Signal S_{Korr} > 0 (Umschaltbedingung) vom Wegregelmodus als Standard-Betriebsart auf einen Druckregelmodus umschaltet. Dabei sieht der Regler 23 für die Weg- und die Druckregelung unterschiedliche Parameter vor.

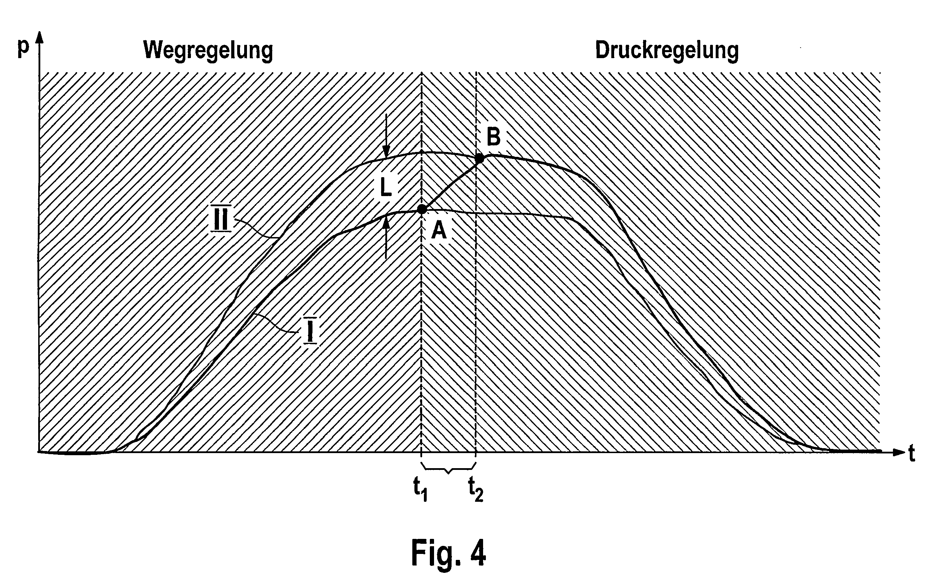

Um bei der zweiten Ausführung der Regelschaltung eine sprunghafte Änderung der Regelgröße zu verhindern wird zum Zeitpunkt t₁ (Punkt A der Kennlinie - Ende der Wegregelung) des Umschaltens eine dem Druckregelmodus zugeordnete Übergangsfunktion, beispielsweise eine Tiefpassfilterung oder ein Rampenverlauf, aktiviert. Dieser Vorgang ist in Fig. 4 dargestellt, wobei die mit I gekennzeichnete Kennlinie p = f(t) dem Wegregelmodus, die mit II gekennzeichnete Kennlinie dem Druckregelmodus und der Abschnitt A - B der Übergangsfunktion entsprechen. Aus der Darstellung ist ersichtlich, dass die Regelung ab dem Zeitpunkt t₂ (Punkt B der Kennlinie) der Druckregelungs-Kennlinie folgt. Die vertikale Verschiebung L zwischen den beiden Kennlinien I und II wird z. B. durch Gaseinschlüsse oder Leckagen verursacht.

## Patentansprüche

1. Bremssystem vom Typ "Brake-by-wire" zur Betätigung einer Kraftfahrzeugbremsanlage, mit:
einem sowohl mittels eines Bremspedals als auch mittels einer elektronischen Steuer- und Regeleinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
einem dem Bremskraftverstärker wirkungsmäßig nachgeschalteten Hauptbremszylinder, an dessen Druckräume Radbremsen des Kraftfahrzeuges angeschlossen sind,
einem mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist,
einem ersten Sensor (6) zur Erfassung des Bremspedal-Betätigungsweges (S_{Bp}), einem zweiten Sensor (18) zur Erfassung des Weges (S_{Ds}) eines Ausgangsglieds (20) des Bremskraftverstärkers und einem dritten Sensor 21 zur Erfassung des im System herrschenden Bremsdruckes, deren Signale der elektronischen Steuer- und Regeleinheit (7) zugeführt werden, **dadurch gekennzeichnet, dass** die elektronische Steuer- und Regeleinheit (7) eine Regelschaltung zur Regelung des vom Ausgangsglied (20) des Bremskraftverstärkers (3) zurück gelegten Weges (S_{Ds}) aufweist, wobei der Sollwert (S_{DsSoll}) des vom Ausgangsglied (20) des Bremskraftverstärkers (3) zurück gelegten Weges (S_{Ds}) entsprechend dem Betätigungsweg (S_{Bp}) des Bremspedals (1) berechnet wird und wobei ein Überwachungsmodul (24) vorgesehen ist, das bei einem Fehlerfall, wie beispielsweise einem Lufteinschluss oder einem Bremskreisausfall, eine teilweise Kompensation der durch den Fehler verursachten Verlängerung des vom Ausgangsglied (20) des Bremskraftverstärkers (3) zurück gelegten Weges (S_{Ds}) vornimmt.

2. Bremssystem vom Typ "Brake-by-wire" zur Betätigung einer Kraftfahrzeugbremsanlage, mit:
einem sowohl mittels eines Bremspedals als auch mittels einer elektronischen Steuer- und Regeleinheit fahrerwunschabhängig betätigbaren Bremskraftverstärker, wobei Mittel zur Entkopplung einer kraftübertragenden Verbindung zwischen dem Bremspedal und dem Bremskraftverstärker in der Betriebsart "Brake-by-wire" vorgesehen sind,
einem dem Bremskraftverstärker wirkungsmäßig nachgeschalteten Hauptbremszylinder, an dessen Druckräume Radbremsen des Kraftfahrzeuges angeschlossen sind,
einem mit dem Bremspedal zusammenwirkenden Pedalwegsimulator, durch den in der Betriebsart "Brake-by-wire" eine auf das Bremspedal wirkende Rückstellkraft unabhängig von einer Betätigung des Bremskraftverstärkers simulierbar ist und der in der Betriebsart "Brake-by-wire" bei der Entkopplung der kraftübertragenden Verbindung zwischen dem Bremspedal und dem Bremskraftverstärker zuschaltbar und außerhalb der Betriebsart "Brake-by-wire" abschaltbar ist,
einem ersten Sensor zur Erfassung des Bremspedal-Betätigungsweges (S_{Bp}), einem zweiten Sensor zur Erfassung des Weges (S_{Ds}) eines Ausgangsglieds des Bremskraftverstärkers, und einem dritten Sensor 21 zur Erfassung des im System herrschenden Bremsdruckes, deren Signale der elektronischen Steuer- und Regeleinheit (7) zugeführt werden, **dadurch gekennzeichnet, dass** die elektronische Steuer- und Regeleinheit (7) eine Regelschaltung zur Regelung des vom Ausgangsglied (20) des Bremskraftverstärkers (3) zurück gelegten Weges (S_{Ds}) sowie des im System herrschenden, hydraulischen Druckes (p) aufweist, deren Sollwerte (S_{DsSoll}, P_{Soll}) entsprechend dem Betätigungsweg (S_{Bp}) des Bremspedals (1) berechnet werden, wobei ein Überwachungsmodul (24) vorgesehen ist, das bei einem Fehlerfall, wie beispielsweise einem Lufteinschluss oder einem Bremskreisausfall, die Regelschaltung vom Wegregelmodus auf den Druckregelmodus umschaltet, um eine Kompensation der durch den Fehler verursachten Verlängerung des vom Ausgangsglied (20) des Bremskraftverstärkers (3) zurück gelegten Weges (S_{Ds}) vorzunehmen.

3. Bremssystem nach Anspruch 1 oder 2 **dadurch gekennzeichnet, dass** im Überwachungsmodul (24) eine Druckmittelvolumen-Druck-Kennlinie, d. h. die Abhängigkeit der Druckmittelvolumenaufnahme (Q) der Bremsen bzw. des der Druckmittelvolumenaufnahme (Q) entsprechenden, vom Ausgangsglied (20) des Bremskraftverstärkers (3) zurück gelegten Weges (S_{Ds}) vom hydraulischen Druck (p) Q bzw. S_{Ds} = f(p) abgelegt ist und dass dem Überwachungsmodul (24) die Istwerte (S_{DsISt}, pᵢₛₜ) des vom Ausgangsglied (20) des Bremskraftverstärkers (3) zurück gelegten Weges (S_{Ds}) sowie des im System herrschenden hydraulischen Druckes (p) zugeführt werden, wobei aus dem Druck-Istwert (pᵢₛₜ) ein dem Druckmittelvolumen-Sollwert (Q_{Soll}) entsprechender Wegwert (S_{Modell}) berechnet wird, der mit dem Istwert (S_{DsIst}) des vom Ausgangsglied (20) des Bremskraftverstärkers (3) zurück gelegten Weges (S_{Ds}) verglichen wird, und, wenn das Vergleichsergebnis (ΔS_{Diff} = S_{Modell} - S_{DsIst}) einen Schwellwert (S_{Schwell}) überschreitet, im Überwachungsmodul (24) ein Korrekturwert (S_{Korr}) gebildet wird, der auf einen Fehler im System schließen lässt.

4. Bremssystem nach Anspruch 1 und 3 **dadurch gekennzeichnet, dass** die teilweise Kompensation der durch den Fehler verursachten Verlängerung des vom Ausgangsglied (20) des Bremskraftverstärkers (3) zurück gelegten Weges (S_{Ds}) durch Hinzuaddieren des Korrekturwertes (S_{Korr}) zum Sollwert (S_{DsSoll}) erfolgt.

5. Bremssystem nach Anspruch 4 **dadurch gekennzeichnet, dass** der Korrekturwert (S_{Korr}) dem halben Vergleichsergebnis (ΔS/2) entspricht.

6. Bremssystem nach Anspruch 2 und 3 **dadurch gekennzeichnet, dass** das Umschalten der Regelschaltung vom Weg- auf den Druckregelmodus durch den Korrekturwert (S_{Korr}) erfolgt.

7. Bremssystem nach einem der vorhergehenden Ansprüche **dadurch gekennzeichnet, dass** die Istwerte (S_{DsIst}, p_{Ist}) einer Tiefpassfilterung unterzogen werden.

8. Bremssystem nach Anspruch 2, 3 oder 6 **dadurch gekennzeichnet, dass** beim Erkennen eines Fehlerfalls eine Übergangsfunktion, beispielsweise eine Tiefpassfilterung oder ein Rampenverlauf, aktiviert wird.

9. Bremssystem nach einem der Ansprüche 1 bis 8 **dadurch gekennzeichnet, dass** beim Erkennen eines Fehlerfalls im System eine Warnlampe (31) aktiviert wird.

## Claims

1. Brake system of the 'brake-by-wire' type for actuating a motor vehicle brake system comprising:
a brake booster which is operable in response to the driver's wish both by means of a brake pedal and by means of an electronic regulating and control unit,
with a means being provided to decouple a force-transmitting connection between the brake pedal and the brake booster in the 'brake-by-wire' operating mode,
a master brake cylinder connected downstream of the brake booster in terms of effect, to the pressure chambers of which wheel brakes of the motor vehicle are connected,
a pedal travel simulator which interacts with the brake pedal and due to which a resetting force acting on the brake pedal can be simulated in the 'brake-by-wire' operating mode independently of an actuation of the brake booster, and which can be enabled in the 'brake-by-wire' operating mode when the force-transmitting connection between the brake pedal and the brake booster is decoupled and can be disabled outside the 'brake-by-wire' operating mode,
a first sensor (6) to sense the brake pedal actuating travel (S_{Bp}), a second sensor (18) to sense the travel (S_{Ds}) of an output member (20) of the brake booster, and a third sensor (21) to sense the brake pressure prevailing in the system, the signals of which sensors are sent to the electronic regulating and control unit (7),
**characterized in that** the electronic regulating and control unit (7) includes a control circuit for controlling the travel (S_{Ds}) covered by the output member (20) of the brake booster (3), the nominal value (S_{Dsnominal}) of the travel (S_{Ds}) covered by the output member (20) of the brake booster (3) being calculated corresponding to the actuating travel (S_{Bp}) of the brake pedal (1), and a monitoring module (24) being provided which, in the case of a fault such as the inclusion of air or brake circuit failure, performs a partial compensation of the extension of the travel (S_{Ds}) covered by the output member (20) of the brake booster (3), which extension is caused by the fault.

2. Brake system of the 'brake-by-wire' type for actuating a motor vehicle brake system comprising:
a brake booster which is operable in response to the driver's wish both by means of a brake pedal and by means of an electronic regulating and control unit,
with a means being provided to decouple a force-transmitting connection between the brake pedal and the brake booster in the 'brake-by-wire' operating mode,
a master brake cylinder connected downstream of the brake booster in terms of effect, to the pressure chambers of which wheel brakes of the motor vehicle are connected,
a pedal travel simulator which interacts with the brake pedal and due to which a resetting force acting on the brake pedal can be simulated in the 'brake-by-wire'
operating mode independently of an actuation of the brake booster, and which can be enabled in the 'brake-by-wire' operating mode when the force-transmitting connection between the brake pedal and the brake booster is decoupled and can be disabled outside the 'brake-by-wire' operating mode,
a first sensor to sense the brake pedal actuating travel (S_{Bp}), a second sensor (18) to sense the travel (S_{Ds}) of an output member of the brake booster, and a third sensor (21) to sense the brake pressure prevailing in the system, the signals of which sensors are sent to the electronic regulating and control unit (7),
**characterized in that** the electronic regulating and control unit (7) includes a control circuit for controlling the travel (S_{Ds}) covered by the output member (20) of the brake booster (3) and the hydraulic pressure (p) prevailing in the system, the nominal values (S_{Dsnominal}, pₙₒₘᵢₙₐₗ) thereof being calculated corresponding to the actuating travel (S_{Bp}) of the brake pedal (1), and a monitoring module (24) being provided which, in the case of a fault such as the inclusion of air or brake circuit failure, switches the control circuit from the travel control mode to the pressure control mode in order to perform a compensation of the extension of the travel (S_{Ds}) covered by the output member (20) of the brake booster (3), which extension is caused by the fault.

3. Brake system as claimed in claim 1 or 2,
**characterized in that** a pressure fluid volume/pressure characteristic curve is stored in the monitoring module (24), i.e. the dependency of the pressure fluid volume absorption (Q) of the brakes or of the travel (S_{Ds}) covered by the output member (20) of the brake booster (3) and corresponding to the pressure fluid volume absorption (Q) on the hydraulic pressure (p) Q or S_{Ds} = f(p), and **in that** the monitoring module (24) is furnished with the actual values (S_{Dsactual,} p_{actual}) of the travel (S_{Ds}) covered by the output member (20) of the brake booster (3) and of the hydraulic pressure (p) prevailing in the system, and a travel value (S_{model}) corresponding to the nominal value (Qₙₒₘᵢₙₐₗ) of the pressure fluid volume is calculated from the actual pressure value (p_{actual}) and compared with the actual value (S_{Dsactual}) of the travel (S_{Ds}) covered by the output member (20) of the brake booster (3), and a correction value (S_{corr}) is produced in the monitoring module (24) from which a fault in the system is inferred, when the comparison result (ΔS_{diff} = S_{model} - S_{Dsactual}) exceeds a threshold value (S_{threshold}).

4. Brake system as claimed in claims 1 and 3,
**characterized in that** the partial compensation of the extension of the travel (S_{Ds}) covered by the output member (20) of the brake booster (3), which extension is caused by the fault, is performed by adding the correction value (S_{corr}) to the nominal value (S_{Dsnominal}).

5. Brake system as claimed in claim 4,
**characterized in that** the correction value (S_{corr}) corresponds to half the result of the comparison (ΔS/2).

6. Brake system as claimed in claims 2 and 3,
**characterized in that** the switch-over of the control circuit from the travel control mode to the pressure control mode is performed by the correction value (S_{corr}) .

7. Brake system as claimed in any one of the preceding claims,
**characterized in that** the actual values (S_{Dsactual}, p_{actual}) undergo a low-pass filtering operation.

8. Brake system as claimed in claims 2, 3, or 6,
**characterized in that** a transition function, e.g. low-pass filtering or a ramp function, is activated when a case of fault is detected.

9. Brake system as claimed in any one of claims 1 to 8,
**characterized in that** a warning lamp (31) is activated when a case of fault is detected in the system.

## Revendications

1. Système de freinage du type "brake-by-wire" pour l'actionnement d'un système de freinage de véhicule automobile, comportant :
un servofrein qui peut être actionné aussi bien au moyen d'une pédale de frein qu'au moyen d'une unité électronique de commande et de régulation en fonction de la volonté du conducteur, des moyens étant prévus entre la pédale de frein et le servofrein en mode "brake-by-wire" pour désaccoupler une liaison transmettant les forces,
un cylindre de frein principal, couplé de manière active en aval du servofrein et aux chambres de pression duquel sont raccordés des freins de roue du véhicule automobile,
un simulateur de course de pédale coopérant avec la pédale de frein, par lequel, en mode "brake-by-wire", une force de rappel agissant sur la pédale de frein peut être simulée indépendamment d'un actionnement du servofrein, et qui, en mode "brake-by-wire", peut être activé lors du découplage de la liaison transmettant les forces entre la pédale de frein et le servofrein, et peut être désactivé en dehors du mode brake-by-wire",
un premier capteur (6) pour détecter la course d'actionnement de la pédale de frein (S_{Bp}), un second capteur (18) pour détecter la course (S_{Ds}) d'un organe de sortie (20) du servofrein, ainsi qu'un troisième capteur (21) pour détecter la pression de freinage régnant dans le système, dont les signaux sont envoyés à l'unité électronique de commande et de régulation (7), **caractérisé en ce que** l'unité électronique de commande et de régulation (7) comporte un circuit de régulation pour réguler la course (S_{Ds}) franchie par l'organe de sortie (20) du servofrein (3), la valeur de consigne (S_{DsSoll}) de la course (S_{Ds}) franchie par l'organe de sortie (20) du servofrein (3) étant calculée en fonction de la course d'actionnement (S_{Bp}) de la pédale de frein (1), et un module de surveillance (24) étant prévu qui en cas de défaut, tel que par exemple une inclusion d'air ou une défaillance du circuit de freinage, procède à une compensation partielle de l'allongement, provoqué par le défaut, de la course (S_{Ds}) franchie par l'organe de sortie (20) du servofrein (3).

2. Système de freinage du type "brake-by-wire" pour l'actionnement d'un système de freinage de véhicule, comportant
un servofrein qui peut être actionné aussi bien au moyen d'une pédale de frein qu'au moyen d'une unité électronique de commande et de régulation en fonction de la volonté du conducteur, des moyens étant prévus entre la pédale de frein et le servofrein en mode "brake-by-wire" pour désaccoupler une liaison transmettant les forces,
un cylindre de frein principal, couplé de manière active en aval du servofrein et aux chambres de pression duquel sont raccordés des freins de roue du véhicule automobile,
un simulateur de course de pédale coopérant avec la pédale de frein, par lequel, en mode "brake-by-wire", une force de rappel agissant sur la pédale de frein peut être simulée indépendamment d'un actionnement du servofrein, et qui, en mode "brake-by-wire", peut être activé lors du découplage de la liaison transmettant les forces entre la pédale de frein et le servofrein, et peut être désactivé en dehors du mode brake-by-wire",
un premier capteur (6) pour détecter la course d'actionnement de la pédale de frein (S_{Bp}), un second capteur (18) pour détecter la course (S_{Ds}) d'un organe de sortie (20) du servofrein, ainsi qu'un troisième capteur (21) pour détecter la pression de freinage régnant dans le système, dont les signaux sont envoyés à l'unité électronique de commande et de régulation (7), **caractérisé en ce que** l'unité électronique de commande et de régulation (7) comporte un circuit de régulation pour la régulation de la course (S_{Ds}) franchie par l'organe de sortie (20) du servofrein (3) ainsi que de la pression hydraulique (p) régnant dans le système, dont les valeurs de consigne (S_{DsSoll}, p_{Soll}) de la course (S_{Ds}) franchie par l'organe de sortie (20) du servofrein (3) sont calculées en fonction de la course d'actionnement (S_{Bp}) de la pédale de frein (1), et un module de surveillance (24) étant prévu qui en cas de défaut, tel que par exemple une inclusion d'air ou une défaillance du circuit de freinage, commute le circuit de régulation du mode régulation de la course au mode régulation de la pression, afin de procéder à une compensation de l'allongement, provoqué par le défaut, de la course (S_{Ds}) franchie par l'organe de sortie (20) du servofrein (3).

3. Système de freinage selon la revendication 1 ou 2, **caractérisé en ce que** dans le module de surveillance (24) est enregistrée une courbe caractéristique volume du fluide sous pression-pression, c'est-à-dire la dépendance de la consommation de volume de fluide sous pression (Q) des freins ou de la course (S_{Ds}) correspondant à la consommation de volume de fluide sous pression (Q) et franchie par l'organe de sortie (20) du servofrein (3), à l'égard de la pression hydraulique (p) Q ou S_{Ds} = Sp et **en ce qu'**au module de surveillance (24) sont amenées les valeurs réelles (S_{DsIst}, pᵢₛₜ) de la course (S_{Ds}) franchie par l'organe de sortie (20) du servofrein (3), ainsi que de la pression hydraulique (p) régnant dans le système, à partir de la valeur réelle de la pression (pᵢₛₜ) étant calculée une valeur de course (S_{Modell}) correspondant à la valeur de consigne du volume de fluide sous pression (Q_{Soll}), laquelle est comparée à la valeur réelle (S_{DsIst}) de la course (S_{Ds}) franchie par l'organe de sortie (20) du servofrein (3), et, lorsque le résultat de la comparaison (ΔS_{Diff} = S_{Modell} - S_{DsIst}) dépasse une valeur de seuil (S_{Schwell}), il est formé dans le module de surveillance (24) une valeur de correction S_{Korr} qui permet de conclure à un défaut du système.

4. Système de freinage selon les revendications 1 et 3, **caractérisé en ce que** la compensation partielle de l'allongement, causé par le défaut, de la course S_{Ds} franchie par l'organe de sortie (20) du servofrein (3), s'effectue par addition de la valeur de correction (S_{Korr}) à la valeur de consigne (S_{DsSoll}).

5. Système de freinage selon la revendication 4, **caractérisé en ce que** la valeur de correction (S_{Korr}) correspond à la moitié du résultat de la comparaison (ΔS/2).

6. Système de freinage selon les revendications 2 et 3, **caractérisé en ce que** la commutation du circuit de régulation du mode de régulation de course au mode de régulation de pression s'effectue par la valeur de correction (S_{Korr}).

7. Système de freinage selon l'une des revendications précédentes, **caractérisé en ce que** les valeurs réelles (S_{DsIst}, P_{Ist}) sont soumises à un filtrage passe-bas.

8. Système de freinage selon la revendication 2, 3 ou 6, **caractérisé en ce qu'**une fonction de transition, par exemple un filtrage passe-bas ou une rampe, est activée lorsqu'est reconnu un cas de défaut.

9. Système de freinage selon l'une des revendications 1 à 8, **caractérisé en ce qu'**une lampe témoin (31) est activée lorsqu'un cas de défaut est reconnu dans le système.
